# EUROPEAN PATENT APPLICATION

(11) **EP 3 932 865 A1**
(43) Date of publication of application: **05.01.2022**
(21) Application number: 20762920.5
(22) Date of filing: 13.02.2020
(51) Int. Cl.: C01B 33/146, B01J 13/00, C01G 23/04, C01G 25/02, C08G 77/42, C08G 77/48, C08K 9/06, C08L 83/04

(54) **INORGANIC OXIDE PARTICLE, INORGANIC OXIDE PARTICLE DISPERSION AND PREPARATION METHOD THEREOF, AND METHOD FOR PRODUCING SURFACE MODIFIER**

(30) Priority: 25.02.2019 JP 2019031669
(71) Applicant: Nissan Chemical Corporation, Tokyo 103-6119 (JP)
(72) Inventor: SUEMURA Naohiko, Sodegaura-shi, Chiba 299-0266 (JP); MAETA Tomoya, Sodegaura-shi, Chiba 299-0266 (JP)
(74) Representative: Carpmaels & Ransford LLP
(86) International application number: PCT/JP2020/005616
(87) International publication number: WO 2020/175159

(57) **Abstract**

Provided is an inorganic oxide dispersion (sol) in which inorganic oxide particles are dispersed in silicone oil.

## Description

### TECHNICAL FIELD

The present invention relates to inorganic oxide particles surface-modified with a specific surface modifier. The present invention also relates to a dispersion in which inorganic oxide particles surface-modified with a specific surface modifier are dispersed in a silicone oil, and a method for producing the dispersion. The present invention also relates to a method for producing a surface modifier for surface-modifying inorganic oxide particles.

### BACKGROUND ART

Inorganic oxide particles, in particular, silica particles can be suitably used as a filler dispersed in a silicone oil. For example, a dispersion (sol) in which an inorganic oxide such as silica, zirconia, or titania is dispersed in a silicone oil is a material effective for improving the refractive index and the mechanical properties since the refractive index and the mechanical properties can be changed by mixing the dispersion with a resin or applying the dispersion to a substrate.

For example, Patent Literature 1 discloses a coating liquid for forming a low dielectric constant silica-based film containing a polyether-modified silicone oil and a hydrolyzate of an alkoxysilane or a halogenated silane. Patent Literature 1 describes that an insulating film excellent in adhesion to a surface to be coated, mechanical strength, chemical resistance, and crack resistance can be formed (see claims and abstract).

Patent Literature 2 discloses a coating composition for forming a lubricating releasable surface layer containing (A) a base composed of 70 to 90 mass% of a hydrocarbon-based oil and 5 to 15 mass% of a silicone oil, (B) a surface layer-forming component composed of 2.0 to 8.0 mass% of a vinyl group-containing polysiloxane and 2.0 to 8.0 mass% of an alkyltrialkoxysilane, and (C) a silica fine powder. Patent Literature 2 describes that a lubricating releasable surface layer having high adhesion and excellent heat resistance, pressure resistance, and durability can be formed on the working surface of a metal substrate (see claims and abstract).

Patent Literatures 3 and 4 disclose that a specific dispersant such as a carboxylic acid or an amine is bonded to the surface of inorganic oxide particles such as silica particles in advance to impart dispersibility in a hydrophobic solvent, then the inorganic oxide particles are dispersed in the hydrophobic solvent, and the specific dispersant bonded to the surface of the inorganic oxide particles in advance is substituted with a surface modifier composed of a polydimethylsiloxane backbone polymer having a monofunctional group at one terminal in the hydrophobic solvent to bond the monofunctional group of the surface modifier composed of a polydimethylsiloxane backbone polymer having a monofunctional group at one terminal to the surface of the inorganic oxide particles, and then the obtained polydimethylsiloxane backbone polymer having a monofunctional group at one terminal is bonded to the surface of the inorganic oxide particles to composite the surface-modified inorganic oxide particles and the silicone resin. Patent Literatures 3 and 4 describe that a composite composition in which phase separation, pores, and cracks do not occur can be produced by favorably combining a silicone resin with inorganic oxide particles (see abstract, and paragraphs [0039] and [0042] in the specification).

### CITATION LIST

### PATENT LITERATURE

PATENT LITERATURE 1: JP H11-50007 A
PATENT LITERATURE 2: JP 2012-115841 A
PATENT LITERATURE 3: JP 2012-021117 A
PATENT LITERATURE 4: JP 2013-064163 A

### SUMMARY OF INVENTION

### TECHNICAL PROBLEMS

Patent Literature 1 describes a technique in which a polysiloxane having a reactive functional group (organic functional group) at a terminal is used, and the polysiloxane is grafted onto the surface of silica particles by a dehydration reaction between the functional group and a silanol group on the surface of silica particles. Since the organic functional group and the silanol group are different in hydrophilicity and hydrophobicity, there is a problem that it is difficult to graft the polysiloxane onto the surface of silica particles by a sufficient reaction between the organic functional group and the silanol group.

The techniques described in Patent Literatures 3 and 4 also have a similar problem. Patent Literatures 3 and 4 describe, as described above, a technique in which a dispersant such as a carboxylic acid or an amine is bonded to the surface of silica particles in advance, then the silica particles are dispersed in a hydrophobic solvent, and then a specific dispersant bonded to the surface of the silica particles in advance is substituted with a surface modifier composed of a polydimethylsiloxane backbone polymer having a monofunctional group at one terminal to bond the monofunctional group of a surface modifier composed of a polydimethylsiloxane backbone polymer having a monofunctional group at one terminal to the surface of the silica particles, thus obtaining surface-modified silica particles. As in Patent Literature 1, since the organic functional group and the silanol group are different in hydrophilicity and hydrophobicity, it is difficult to graft polysiloxane onto the surface of the silica particles by a sufficient reaction between them.

As described above, Patent Literature 2 discloses a coating composition for forming a lubricating releasable surface layer containing a base composed of a hydrocarbon-based oil and a silicone oil, a surface layer-forming component composed of a vinyl group-containing polysiloxane and an alkyltrialkoxysilane, and a silica fine powder. However, Patent Literature 2 neither describes nor suggests that the vinyl group-containing polysiloxane and the alkyl trialkoxysilane are reacted with the silica fine powder and dispersed in the silicone oil.

In a method for dispersing silica particles in a silicone oil as a nonpolar solvent by grafting polysiloxane onto the surface of silica particles as a hydrophilic substance, when the above-described prior art is used, there is a problem that the reaction between a reactive functional group (organic functional group) and a silanol group on the surface of silica particles does not sufficiently proceed because it is a reaction between an organic substance and an inorganic substance, and it is difficult to graft polysiloxane onto the surface of silica particles. This leads to a problem that it is difficult to obtain silica particles with polysiloxane sufficiently grafted onto the surface thereof.

The present invention has been made to solve the above problems and other problems. An object thereof is to provide, as an example, a method for producing a surface modifier (surface coating agent) for making it possible to disperse inorganic oxide particles having a surface with hydrophilicity due to a silanol group or the like in a nonpolar solvent (hydrophobic solvent) such as a silicone oil with good compatibility, inorganic oxide particles coated with the surface modifier, and an inorganic oxide dispersion (sol) in which the surface-modified inorganic oxide particles are dispersed in a nonpolar solvent such as a silicone oil and a method for producing the same.

### SOLUTION TO PROBLEMS

As a result of intensive studies on the above problems, the present inventors have found that the problems of the present invention can be solved by the following means, and have completed the present invention.

That is, aspects of the present invention are, for example, as follows.
<1> Inorganic oxide particles surface-modified with a surface modifier represented by following general formula (a):
   [Chemical Formula 1]

   **S-K** Formula (a)

   wherein S represents a hydrolyzable silane, and K represents silicone.
<2> Inorganic oxide particles surface-modified with a surface modifier represented by following general formula (1): 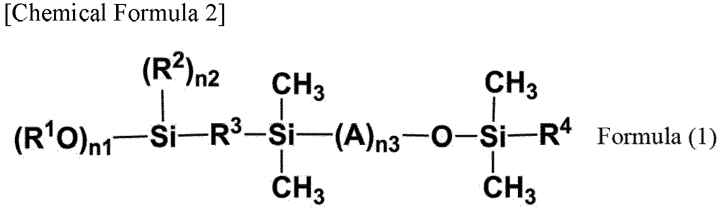 wherein
   R¹ represents a methyl group or an ethyl group,
   R² represents an alkyl group having 1 to 10 carbon atoms, an aryl group having 6 to 40 carbon atoms, or a combination thereof,
   R³ is a linking group comprising a chemical group produced by a reaction between a B group and a C group,
   the B group is an epoxy group, a vinyl group, a hydroxyl group, or an isocyanate group,
   the C group is a carboxyl group, an acid anhydride group, an amino group, a thiol group, a hydroxyl group, or an isocyanate group,
   R⁴ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, or an OH group, and modifies a silanol group on the surface of silica particles with an OH group obtained by hydrolysis of an OR¹ group,
   a unit structure A includes a unit structure of following general formula (1-1) and a unit structure of following general formula (1-2), and the number of unit structures of the general formula (1-1) and the number of unit structures of the general formula (1-2) included in the unit structure A are n4 and n5, respectively: 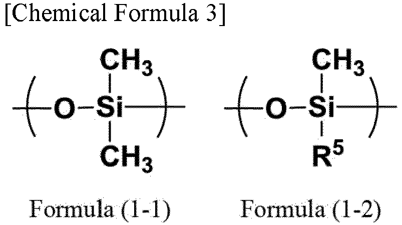 wherein R⁵ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, an OH group, or a hydrogen atom, and
   n1 is an integer of 1 to 3, n2 is an integer of 0 to 1, n1 + n2 = 3, n3 = n4 + n5, n3 is an integer of 1 to 100, 0 ≤ n4 ≤ 100, and 1 ≤ n5 ≤ 100.
<3> The inorganic oxide particles according to <1> or <2>, wherein the inorganic oxide particles have an average primary particle size of 5 to 100 nm.
<4> The inorganic oxide particles according to any one of <1> to <3>, wherein the inorganic oxide particles are selected from the group consisting of silica particles, zirconia particles, titania particles, and tin oxide particles.
<5> The inorganic oxide particles according to any one of <2> to <4>, wherein the B group is an epoxy group, and the C group is an amino group.
<6> The inorganic oxide particles according to any one of <2> to <5>, wherein R⁴ and/or R⁵ is selected from the group consisting of an alkyl group having 1 to 10 carbon atoms, an aryl group having 6 to 40 carbon atoms, and an OH group.
<7> The inorganic oxide particles according to any one of <2> to <6>, wherein the inorganic oxide particles are silica particles surface-modified with a surface modifier represented by a general formula (a) or the general formula (1) at 0.1 to 10 groups/nm².
<8> The inorganic oxide particles according to any one of <1> to <7>, wherein the inorganic oxide particles further have a trimethylsilyl group at 0.3 to 20 groups/nm² on a surface thereof.
<9> A dispersion comprising the inorganic oxide particles according to any one of <1> to <8> dispersed in a silicone oil.
<10> The dispersion according to <9>, wherein the silicone oil is a dimethyl silicone oil, a methyl phenyl silicone oil, or a methyl hydrogen silicone oil having a viscosity of 100 centistokes to 5,000 centistokes.
<11> A method for producing the surface modifier according to any one of <1> to <8>, the method comprising a step of:
   reacting a silicone oil comprising a functional group (b) at a site consisting of a side chain, one terminal, both terminals, or a combination thereof with a silane coupling agent comprising a functional group (c) in an alcohol solvent at a molar ratio of the functional group (b) : the functional group (c) of 1 : 1 to 1 : 0.8,
   the functional group (b) being selected from the group consisting of an epoxy group, a vinyl group, a hydroxyl group, and an isocyanate group,
   the functional group (c) being selected from the group consisting of a carboxyl group, an acid anhydride group, an amino group, a thiol group, a hydroxyl group, and an isocyanate group.
<12> A method for producing the dispersion according to <9> or <10>, the method comprising:
   a step (i): mixing an inorganic oxide sol dispersed in a mixed solvent of a hydrocarbon and an alcohol with an alcohol solution of a surface modifier represented by a general formula (1) in a hydrocarbon solvent at a weight ratio of inorganic oxide : surface modifier represented by the general formula (1) of 1 : 0.1 to 10;
   a step (ii): performing a reaction at 60°C to 150°C for 0.1 to 60 hours;
   a step (iii): removing an alcohol solvent to obtain a surface-modified inorganic oxide sol dispersed in the hydrocarbon solvent; and
   a step (iv): mixing the surface-modified inorganic oxide sol dispersed in the hydrocarbon solvent with a silicone oil to remove a hydrocarbon.

### ADVANTAGEOUS EFFECTS OF INVENTION

In the present invention, as one aspect, a silicone (reactive silicone) having a reactive functional group at a terminal or a side chain of a silicone molecule is used as a coating agent for inorganic oxide particles (for example, silica particles), and a silane coupling agent is reacted with the reactive group to synthesize a silicone material having an alkoxysilyl group at a terminal or a side chain of a silicone molecule as a surface modifier. According to the present invention, since the alkoxysilyl group is hydrolyzed to form a silanol group, a dehydration reaction occurs between the alkoxysilyl group and the silanol group on the surface of the silica particles, so that a surface-modified site having a silicone backbone can be firmly formed on the surface of the silica particles.

According to the present invention, as one aspect, since the surface-modified site is immobilized on the surface of the inorganic oxide particles (for example, silica particles) by a siloxane bond, the surface-modified site is not detached from the silica particles, and thus the inorganic oxide particles can be stably dispersed in a silicone oil as a dispersion medium.

According to the present invention, as one aspect, since the surface-modified inorganic oxide particles (for example, silica particles) can be stably dispersed in a silicone oil, the silicone oil is excellent in long-term stability.

According to the present invention, as one aspect, inorganic oxide particles (for example, silica particles) modified with a specific surface modifier are stably dispersed in a silicone oil, and can effectively contribute to improvement of the refractive index and the mechanical properties of a dispersion, and can also contribute to high transparency of the dispersion. Therefore, the inorganic oxide particles, the surface modifier, and the dispersion can be used for various applications, for example, as a compounding agent for a silicone resin and a sealant for an LED.

According to the present invention, not only silica particles but also tin oxide particles, zirconia particles, and titania particles can function in the same manner as the inorganic oxide particles.

According to the present invention, as one aspect, by using a modified polysiloxane having an alkoxysilane at a polysiloxane terminal and performing a dehydration reaction between silanol groups, with a silanol group on the surface of silica particles, a strong reaction between an inorganic substance and an inorganic substance by Si-O-Si smoothly proceeds. Thus, silica particles with polysiloxane sufficiently grafted onto the surface thereof can be obtained, and a silica sol dispersed in a silicone oil can be obtained. In addition, even when inorganic oxide particles such as zirconia particles, titania particles, and tin oxide particles are used instead of the silica particles, polysiloxane can be grafted onto the surface of the inorganic oxide particles via Si-O-Si by forming a silica component on the surface layer.

### DESCRIPTION OF EMBODIMENTS

Hereinafter, preferred embodiments of the present invention will be described. However, the following embodiments are examples for describing the present invention, and the present invention is not limited to the following embodiments at all.

In the present specification, a numerical range represented using "to" means a range including numerical values described before and after "to" as a lower limit value and an upper limit value.

### (Inorganic oxide particles and dispersion in which inorganic oxide particles are dispersed in silicone oil)

In an embodiment of the present invention, inorganic oxide particles are surface-modified with a surface modifier represented by the following general formula (a) or the following general formula (1).

In an embodiment of the present invention, a dispersion (sol) contains a dispersoid containing surface-modified (colloidal) inorganic oxide particles dispersed in a silicone oil, and the surface modifier is a dispersion represented by the following general formula (a) or the following general formula (1).

### [Chemical Formula 4]

**S-K** Formula (a)

In the general formula (a), S represents a hydrolyzable silane, and K represents silicone.

In an embodiment of the present invention, the term "surface-modified (colloidal) inorganic oxide particles" refers to particles in which the surface modifier molecule of the general formula (a) is formed on the surface of the inorganic oxide particles by a reaction between a hydroxyl group on the surface of the inorganic oxide particles and a silanol group generated by hydrolysis of an alkoxysilyl group of the surface modifier of the general formula (a). 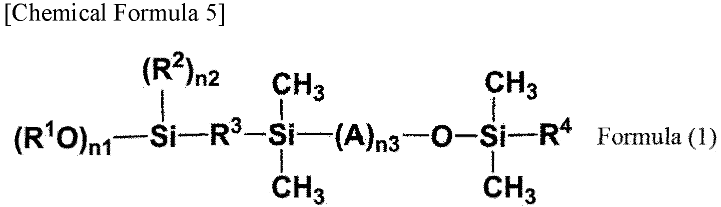 In the formula (1), R¹ represents a methyl group or an ethyl group, R² represents an alkyl group having 1 to 10 carbon atoms, an aryl group having 6 to 40 carbon atoms, or a combination thereof, R³ represents a linking group comprising a chemical group obtained by a reaction between a B group and a C group, the B group is an epoxy group, a vinyl group, a hydroxyl group, or an isocyanate group, the C group is a carboxyl group, an acid anhydride group, an amino group, a thiol group, a hydroxyl group, or an isocyanate group, a unit structure A is formulae (1-1) and (1-2), n1 represents an integer of 1 to 3, n2 represents an integer of 0 to 1, n1 + n2 = 3, n3 = n4 + n5 = an integer of 1 to 100, n4 is 0 ≤ n4 ≤ 100, n5 is 1 ≤ n5 ≤ 100, and R⁴ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, an OH group, or a hydrogen atom, and modifies a silanol group on the surface of silica particles with an OH group obtained by hydrolysis of an OR¹ group.

In an embodiment of the present invention, the term "surface-modified (colloidal) inorganic oxide particles" refers to particles in which the surface modifier molecule of the general formula (a) or the general formula (1) is formed on the surface of the inorganic oxide particles by a reaction between a hydroxyl group on the surface of the inorganic oxide particles and a silanol group generated by hydrolysis of an alkoxysilyl group of the surface modifier of the general formula (a) or the general formula (1).

In the formula (1-2), R⁵ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, an OH group, or a hydrogen atom, and the number of unit structures of the formula (1-1) in the formula (1) is n4, and the number of unit structures of the formula (1-2) in the formula (1) is n5.

In the formula (1), R¹ represents a methyl group or an ethyl group, and generates a silanol group by hydrolysis, and the silanol group is reacted with a silanol group on the surface of silica particles to form a silicone molecular chain of the formula (1) on the surface of the silica particles.

Examples of the alkyl group having 1 to 10 carbon atoms include a methyl group, an ethyl group, a n-propyl group, an i-propyl group, a cyclopropyl group, a n-butyl group, an i-butyl group, a s-butyl group, a t-butyl group, a cyclobutyl group, a 1-methyl-cyclopropyl group, a 2-methyl-cyclopropyl group, a n-pentyl group, a 1-methyl-n-butyl group, a 2-methyl-n-butyl group, a 3-methyl-n-butyl group, a 1,1-dimethyl-n-propyl group, a 1,2-dimethyl-n-propyl group, a 2,2-dimethyl-n-propyl group, a 1-ethyl-n-propyl group, a cyclopentyl group, a 1-methyl-cyclobutyl group, a 2-methyl-cyclobutyl group, a 3-methyl-cyclobutyl group, a 1,2-dimethyl-cyclopropyl group, 2,3-dimethyl-cyclopropyl group, 1-ethyl-cyclopropyl group, a 2-ethyl-cyclopropyl group, a n-hexyl group, a 1-methyl-n-pentyl group, a 2-methyl-n-pentyl group, a 3-methyl-n-pentyl group, a 4-methyl-n-pentyl group, a 1,1-dimethyl-n-butyl group, a 1,2-dimethyl-n-butyl group, a 1,3-dimethyl-n-butyl group, a 2,2-dimethyl-n-butyl group, a 2,3-dimethyl-n-butyl group, a 3,3-dimethyl-n-butyl group, a 1-ethyl-n-butyl group, a 2-ethyl-n-butyl group, a 1,1,2-trimethyl-n-propyl group, a 1,2,2-trimethyl-n-propyl group, a 1-ethyl-1-methyl-n-propyl group, a 1-ethyl-2-methyl-n-propyl group, a cyclohexyl group, a 1-methyl-cyclopentyl group, a 2-methyl-cyclopentyl group, a 3-methyl-cyclopentyl group, a 1-ethyl-cyclobutyl group, a 2-ethyl-cyclobutyl group, a 3-ethyl-cyclobutyl group, a 1,2-dimethyl-cyclobutyl group, a 1,3-dimethyl-cyclobutyl group, a 2,2-dimethyl-cyclobutyl group, a 2,3-dimethyl-cyclobutyl group, a 2,4-dimethyl-cyclobutyl group, a 3,3-dimethyl-cyclobutyl group, a 1-n-propyl-cyclopropyl group, a 2-n-propyl-cyclopropyl group, a 1-i-propyl-cyclopropyl group, a 2-i-propyl-cyclopropyl group, a 1,2,2-trimethyl-cyclopropyl group, a 1,2,3-trimethyl-cyclopropyl group, a 2,2,3-trimethyl-cyclopropyl group, a 1-ethyl-2-methyl-cyclopropyl group, a 2-ethyl-1-methyl-cyclopropyl group, a 2-ethyl-2-methyl-cyclopropyl group, and a 2-ethyl-3-methyl-cyclopropyl group.

Examples of the aryl group having 6 to 40 carbon atoms include aryl groups such as a phenyl group, an o-methylphenyl group, a m-methylphenyl group, a p-methylphenyl group, an o-chlorophenyl group, a m-chlorophenyl group, a p-chlorophenyl group, an o-fluorophenyl group, a p-fluorophenyl group, an o-methoxyphenyl group, a p-methoxyphenyl group, a p-nitrophenyl group, a p-cyanophenyl group, an α-naphthyl group, a β-naphthyl group, an o-biphenylyl group, a m-biphenylyl group, a p-biphenylyl group, a 1-anthryl group, a 2-anthryl group, a 9-anthryl group, a 1-phenanthryl group, a 2-phenanthryl group, a 3-phenanthryl group, a 4-phenanthryl group, and a 9-phenanthryl group.

R² can also be used as, for example, an arylalkyl group that is a combination of an alkyl group and an aryl group.

In the surface modifier of the general formula (1), a functional group of a reactive silicone is reacted with a functional group of a silane coupling agent to form a linking group R³ comprising a new chemical group formed by reacting both the functional groups, and thus an alkoxysilyl group can be introduced into a silicone molecule. In the formula (1), the number n1 of alkoxy groups of the alkoxysilyl group is 1 to 3. The alkoxysilyl group can contain an organic group R², and examples thereof can include the above-described alkyl group and aryl group. The number n2 of R² in the formula (1) can be an integer of 0 to 1. Then, n1 + n2 is an integer of 3.

R³ in the formula (1) is a linking group comprising a chemical group produced by a reaction of a B group and a C group.

As the functional group of both the reactive silicone and the silane coupling agent, for example, the B group can be an epoxy group, a vinyl group, a hydroxyl group, or an isocyanate group, and the C group can be a carboxyl group, an acid anhydride group, an amino group, a thiol group, a hydroxyl group, or an isocyanate group.

Regarding the functional group of the B group and the functional group of the C group, a new chemical group is formed by an addition reaction, a dehydration reaction, or a decarboxylation reaction, and in the reaction, water can also participate in the reaction system.

Examples thereof include an addition reaction between an epoxy group and a carboxyl group, an addition reaction between an epoxy group and an acid anhydride group, an addition reaction between an epoxy group and an amino group, an addition reaction between an epoxy group and a thiol group, an addition reaction between an epoxy group and a hydroxyl group, an addition reaction between a vinyl group and a thiol group, a dehydration reaction between a hydroxyl group and a hydroxyl group, an addition reaction between an isocyanate group and a carboxyl group, an addition reaction between an isocyanate group and an acid anhydride group, an addition reaction between an isocyanate group and an amino group, an addition reaction between an isocyanate group and a thiol group, an addition reaction between an isocyanate group and a hydroxyl group, and a cyclization reaction between isocyanate groups. In particular, it is preferable to use an addition reaction between an epoxy group and an amino group. Examples of R³ include the following linking groups.

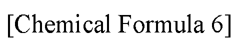

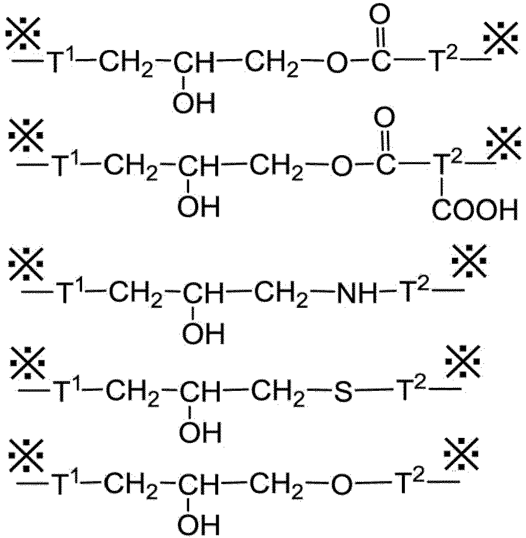

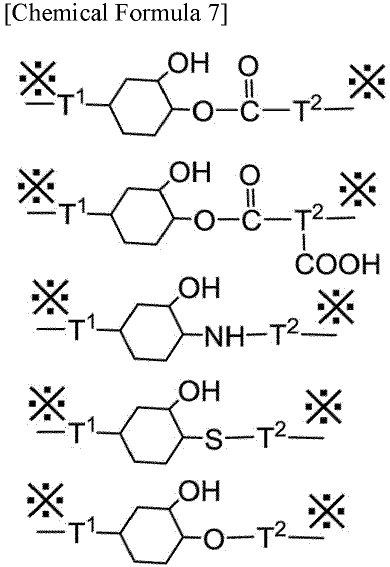

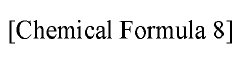

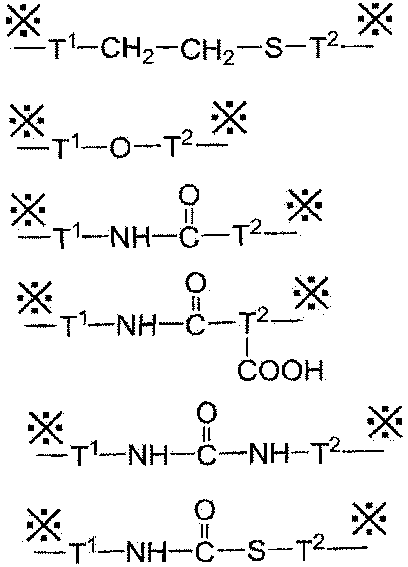

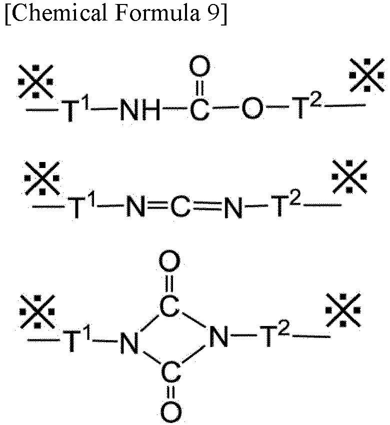

Among the linking groups containing a chemical group, T¹ and T² are groups contained together with a functional group in the reactive silicone or the silane coupling agent, are an alkylene group, an arylene group, or a combination thereof, and may contain an oxygen atom or a nitrogen atom. These alkylene group and arylene group are groups corresponding to the above-described alkyl group and aryl group, and examples thereof can include the above-described examples. In addition, the mark ^{∗} indicates a bonding portion with a silicon atom of the reactive silicone and the silane coupling agent.

In the formula (1), the unit structure A can represent formulae (1-1) and (1-2). Assuming that n4 is the number of unit structures of the formula (1-1) in the formula (1) and n5 is the number of unit structures in the formula (1), n3 which is the number of the unit structures A in the formula (1) can be n3 = n4 + n5 = 1 to 100, n4 can be 0 ≤ n4 ≤ 100, and n5 can be 1 ≤ n5 ≤ 100.

R⁴ and R⁵ contained in the formula (1) each represent an alkyl group having 1 to 10 carbon atoms and optionally containing an epoxy group, a vinyl group, a hydroxyl group, an isocyanate group, a carboxyl group, an acid anhydride group, an amino group, or a thiol group, an aryl group having 6 to 40 carbon atoms, or an OH group.

In an embodiment of the present invention, the concentration of the inorganic oxide in the dispersion is usually 0.1 to 50 mass%, preferably 10 to 50 mass%, and more preferably 20 to 50 mass%.

In an embodiment of the present invention, the average primary particle size of the inorganic oxide particles is usually 5 to 100 nm, preferably 5 to 30 nm, and more preferably 5 to 20 nm. As the average primary particle size, a value measured by a method based on a converted particle size from a specific surface area determined by the nitrogen gas adsorption method (BET method) or transmission electron microscope observation can be used. In the present invention, a method based on the converted particle size from a specific surface area determined by the nitrogen gas adsorption method (BET method) is used.

The inorganic oxide particles can be selected from the group consisting of silica particles, zirconia particles, titania particles, and tin oxide particles.

The inorganic oxide particles may be silica particles surface-modified with a surface modifier represented by the general formula (a) or the general formula (1) preferably at 0.1 to 10 groups/nm², more preferably at 0.2 to 4 groups/nm², and still more preferably at 0.3 to 2 groups/nm².

The inorganic oxide particles may further have a trimethylsilyl group on the surface thereof preferably at 0.3 to 20 groups/nm², more preferably at 0.5 to 10 groups/nm², still more preferably at 1 to 10 groups/nm², and most preferably at 0.5 to 1.0 groups/nm².

The number of surface modifying groups per nm² is a numerical value calculated on the assumption that the surface of the silica particles is surface-modified by the reaction of the surface modifier added to the silica particles.

In an embodiment of the present invention, there is provided a dispersion in which the inorganic oxide particles are dispersed in a silicone oil.

Examples of the silicone oil include a dimethyl silicone oil, a methyl phenyl silicone oil, and a methyl hydrogen silicone oil having a viscosity of 100 centistokes to 5,000 centistokes. Examples thereof include KF-96 (100 centistokes), KF-96 (300 centistokes), KF-96 (500 centistokes), KF-96 (1,000 centistokes), and KF-96 (5,000 centistokes) manufactured by Shin-Etsu Chemical Co., Ltd.

### (Method for producing surface modifier)

As the reactive silicone, any of a one-terminal type, a both-terminal type, a side-chain type, and a side-chain/both-terminal type, which are classified based on the position of the functional group in the silicone molecule, can be selected, and a one-terminal type reactive silicone can be preferably used. When a both-terminal type reactive silicone is selected, the silane coupling agent can be selectively reacted with one functional group by setting the molar ratio of the silane coupling agent to be lower than the molar ratio of the reactive silicone.

The surface modifier of the formula (1) can be synthesized by reacting the reactive silicones with the silane coupling agent. The alkoxy group of the alkoxysilyl group causes hydrolysis, and the generated silanol group reacts with the silanol group on the surface of the silica particles, so that the surface of the silica particles can be coated with a silicone component.

By reacting the functional group of the silane coupling agent with the functional group of the reactive silicone at a molar ratio of equal to or less than (1 : 1 to 1 : 0.8 in synthesis), a surface modifier having one alkoxysilyl group in one molecule of the reactive silicone can be obtained. The number of alkoxysilyl groups in the surface modifier is preferably one in one molecule, and this is preferable because crosslinking between silica particles can be prevented, and causes of aggregation and coarse particle formation can be eliminated.

As the method of introducing one alkoxysilyl group into one molecule of the surface modifier, the surface modifier is more preferably produced by reacting a one-terminal type reactive silicone with a silane coupling agent. In the case of using the one-terminal type reactive silicone, R⁴ and/or R⁵ in the formula (1) and the formula (1-2) can be an alkyl group having 1 to 10 carbon atoms, an aryl group having 6 to 40 carbon atoms, or an OH group.

A method for producing a surface modifier of the formula (1) includes reacting a silicone oil comprising a functional group (b) at a site consisting of a side chain, one terminal, both terminals, or a combination thereof with a silane coupling agent comprising a functional group (c) in an alcohol solvent at a molar ratio of the reactive group (b) : the reactive group (c) of 1 : 1 to 1 : 0.8. The reactive group (b) can be a reactive group selected from an epoxy group, a vinyl group, a hydroxyl group, and an isocyanate group, and the reactive group (c) can be a reactive group selected from a carboxyl group, an acid anhydride group, an amino group, a thiol group, a hydroxyl group, and an isocyanate group.

### (Method for producing dispersion (sol))

In an embodiment of the present invention, examples of a method for producing a surface-modified silica sol by reacting the surface modifier represented by the general formula (1) with a silica sol and dispersing the silica sol in a silicone oil include a method comprising the following steps (i) to (iv).

The method for producing a dispersion includes:
a step (i): mixing a silica sol dispersed in a mixed solvent of a hydrocarbon and an alcohol with an alcohol solution of the surface modifier represented by the formula (1) in a hydrocarbon solvent at a weight ratio of silica : the surface modifier represented by the formula (1) of 1 : 0.1 to 10;
a step (ii): performing a reaction at 60°C to 150°C for 0.1 to 60 hours;
a step (iii): removing an alcohol solvent to obtain a surface-modified silica sol dispersed in the hydrocarbon solvent; and
a step (iv): mixing the surface-modified silica sol dispersed in the hydrocarbon solvent with a silicone oil to remove the hydrocarbon.

The dispersion is a transparent colorless dispersion before the hydrocarbon solvent is removed, but is a transparent colloidal dispersion after the hydrocarbon solvent is removed.

Examples of the hydrocarbon solvent include normal paraffin, isoparaffin-based aliphatic hydrocarbons, naphthenic cyclic aliphatic hydrocarbons, and aromatic hydrocarbons. Aromatic hydrocarbons are preferable, and examples thereof include toluene, xylene, and ethylbenzene.

Examples of the alcohol solvent include methanol, ethanol, propanol, isopropanol, and butanol.

When the surface of the silica particles in the silica sol is coated with the surface modifier of the formula (1), the silica particles can be coated at a rate of 0.1 to 10 groups/nm², or 0.1 to 5 groups/nm², 0.5 to 5 groups/nm², or 0.5 to 1.5 groups/nm².

In the present invention, after coating with the surface modifier of the formula (1), the surface of the silica particles can be further hydrophobized with a trimethylsilyl group. Examples of the trimethylating agent include trimethylchlorosilane, hexamethyldisilazane, and hexamethyldisiloxane. The surface of the silica particles in the silica sol can be coated at a rate of 1 to 20 groups/nm² or 5 to 15 groups/nm².

Examples of the colloidal inorganic oxide particles of the present invention include silica particles, zirconia particles, and titania particles having an average primary particle size of 5 to 100 nm. Similarly to the silica particles, zirconia particles, titania particles, and tin oxide particles can be similarly surface-coated.

In the present invention, by using a modified polysiloxane having an alkoxysilane at a polysiloxane terminal and performing a dehydration reaction between silanol groups, with a silanol group on the surface of silica particles, a strong reaction between an inorganic substance and an inorganic substance by Si-O-Si smoothly proceeds. Thus, silica particles with polysiloxane sufficiently grafted onto the surface thereof can be obtained, and a silica sol dispersed in a silicone oil can be obtained. In addition, even when inorganic oxide particles such as zirconia particles, titania particles, and tin oxide are used instead of the silica particles, polysiloxane can be grafted onto the surface of the inorganic oxide particles via Si-O-Si by forming a silica component on the surface layer. In the case of zirconia particles or titania particles, it is preferable to graft modified polysiloxane after modifying the zirconia particles or the titania particles with a substance containing a silica component in order to form a silica component on the surface layer.

As the silica component-containing substance, silica colloidal particles can be used. The silica colloidal particles used here can be silica alone, but can be combined with other metal oxide colloidal particles in order to adjust the refractive index and improve adhesion. For example, such colloidal particles have an average primary particle size of 5 nm or less. Examples thereof include silicon dioxide-stannic oxide composite oxide colloidal particles having an average primary particle size of 1 to 4 nm.

The silica sol used as the raw material of the present invention can be used by producing an aqueous silica sol and substituting the solvent in the aqueous silica sol to form an organic solvent silica sol. The raw material silica sol having an average primary particle size of the silica particles in a range of 5 to 100 nm can be used. As the average primary particle size, a value measured by a method based on a converted particle size from a specific surface area determined by the nitrogen gas adsorption method (BET method) or transmission electron microscope observation can be used. In the present invention, a method based on the converted particle size from a specific surface area determined by the nitrogen gas adsorption method (BET method) is used.

The aqueous silica sol is obtained by heating a silicic acid solution having a pH of 1 to 6, which is obtained by cation exchange of an aqueous alkali silicate solution having a solid concentration of 1 to 10 mass%, at 50°C to 110°C in the presence of alkali. The cation exchange treatment is performed by bringing the aqueous alkali silicate solution into contact with a strongly acidic cation exchange resin. The cation exchange treatment is performed by passing a treatment liquid through the ion exchange resin packed in the column.

The obtained aqueous silica sol is brought into contact with a strongly basic anion exchange resin to obtain a high-purity alkaline aqueous silica sol. Further, the obtained aqueous silica sol is brought into contact with a strongly acidic cation exchange resin to obtain a high-purity acidic aqueous silica sol. Then, ultrafiltration can be performed for removal of impurities and concentration of the solid content.

As the alkali silicate, sodium silicate, potassium silicate, lithium silicate, and the like can be used, and sodium silicate commercially available under the names of No. 1 sodium water glass, No. 2 sodium water glass, No. 3 sodium water glass, and the like can be used. In addition, an alkali silicate obtained by adding sodium hydroxide, potassium hydroxide, lithium hydroxide, or quaternary ammonium hydroxide to a silicic acid solution obtained by hydrolyzing an alkoxysilane such as tetraethoxysilane or tetramethoxysilane can be used.

In an embodiment of the present invention, the obtained aqueous silica sol can be further subjected to the following steps (I) and (II).

The step (I) includes a step (I-i) of holding under an acidic condition from room temperature to 50°C and pH 1 to 4, a step (I-ii) of heating at 100 to 200°C, or a step (I-iii) comprising a combination thereof.

The step (II) includes a step (II-i) of sequentially performing cation exchange and anion exchange, or a step (II-ii) of sequentially performing cation exchange, anion exchange, and cation exchange.

In the step (I), the step (I-i) of holding under an acidic condition of pH 1 to 4 includes removing sodium ions from the surface of silica (a) particles in an aqueous solution of a silica (a) particle dispersion (sol) by using an acid to form silica (A) particles on which a layer with reduced sodium ions is formed. The adjustment to pH 1 to 4 is achieved by adding sulfuric acid, nitric acid, hydrochloric acid, or the like to the aqueous solution of the silica (a) particle dispersion.

In the step (I), the step (I-ii) of heating at 100 to 200°C includes removing sodium ions from the surface of silica (a) particles in the aqueous solution of the silica (a) particle dispersion (sol) by using an autoclave device to form silica (A) particles on which a layer with reduced sodium ions is formed.

In the step (I), the step (I-i) and the step (I-ii) can be used in combination. For example, the step (I-i) can be performed after the step (I-ii) is performed.

A silica (A) aqueous sol is obtained through the step (II) after the step (I). The step (II) includes the step (II-i) of sequentially performing cation exchange and anion exchange, or the step (II-ii) of sequentially performing cation exchange, anion exchange, and cation exchange. A silica aqueous sol with reduced residual ions is obtained through the step (II-ii).

In the obtained aqueous silica sol, water as a dispersion medium can be replaced with an organic solvent by distillation under reduced pressure, an ultrafiltration method, or the like. Examples of the organic solvent include alcohol solvents such as methanol, ethanol, n-propanol, isopropanol, n-butanol, ethylene glycol, propylene glycol, and butanediol, ketones such as acetone and methyl ethyl ketone, esters such as ethyl acetate, hydrocarbons such as toluene, xylene, and ethylbenzene, dimethylformamide, and N-methyl-2-pyrrolidone.

In an embodiment of the present invention, a silica sol can be obtained by hydrolyzing and polycondensing a hydrolyzable alkoxysilane. Examples of the alkoxysilane include tetraethoxysilane and tetramethoxysilane. The alkoxysilane is hydrolyzed and polycondensed in a solvent containing water to produce a silica sol. Examples of the solvent to be used include alcohol solvents such as methanol, ethanol, n-propanol, isopropanol, n-butanol, ethylene glycol, propylene glycol, and butanediol, ketones such as acetone and methyl ethyl ketone, esters such as ethyl acetate, hydrocarbons such as toluene, xylene, and ethylbenzene, dimethylformamide, and N-methyl-2-pyrrolidone. These solvents can be used as a mixed solvent.

The amount of water used may be 1 to 10 mol with respect to 1 mol of the alkoxy group of the alkoxysilane.

Examples of the alkali catalyst include alkali metals such as sodium hydroxide, potassium hydroxide, and lithium hydroxide; ammonia; quaternary ammonium hydroxides such as tetramethylammonium hydroxide and tetraethylammonium hydroxide; and amines such as ethylenediamine, diethylenetriamine, triethylenetetramine, urea, and ethanolamine.

### (Application)

In an embodiment of the present invention, a dispersion in which a dispersoid containing surface-modified colloidal inorganic oxide particles is dispersed in a silicone oil can be applied as a silicone oil having improved refractive index and mechanical properties for applications in which conventional silicone oils are used. In addition, since the dispersion has high transparency, the inorganic oxide particles, the surface modifier, and the dispersion can be used for various applications, for example, a compounding agent for a silicone resin, a sealant for an LED, and the like.

### EXAMPLES

### (Synthesis of polymer-type silane coupling agent)

In a 1 liter recovery flask, 128 g of one-terminal epoxy-modified silicone (functional group equivalent: 4,700 g/mol, viscosity: 60 mm²/s, product name: X-22-173DX, manufactured by Shin-Etsu Chemical Co., Ltd.) was placed, then 367 g of butanol (manufactured by Kanto Chemical Co., Inc.) was added and stirred, and then 5.0 g of 3-aminopropyltrimethoxysilane (product name: KBM-903, manufactured by Shin-Etsu Chemical Co., Ltd.) was added. Thereafter, the mixture was held at 110°C for 24 hours under stirring to obtain a 1-butanol solution (polymer concentration: 21.3 mass%) of the following polymer-type silane coupling agent. The epoxy equivalent measurement of the obtained solution showed that the reaction rate between an epoxy group and an amino group was 80%.

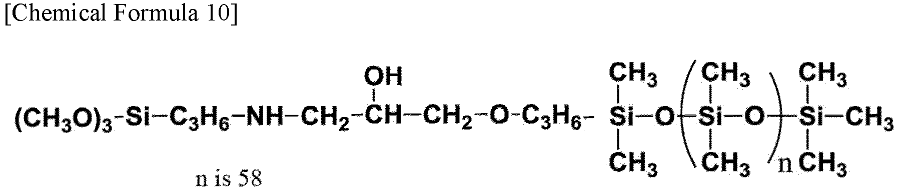

### [Example 1] Preparation-1 of toluene-dispersed silicone polymer graft silica sol

In a 200 ml recovery flask, 30 g of a methanol-dispersed silica sol (product name: MT-ST, average primary particle size: 12 nm, silica concentration: 30 mass%, manufactured by Nissan Chemical Corporation) was placed, and 8.4 g of n-butanol was added. A part of the dispersion medium of the silica sol was replaced with a toluene solvent by using a rotary evaporator to obtain 30 g of a silica sol (average primary particle size: 12 nm, silica concentration: 30 mass%) dispersed in a solvent having a mixing ratio of toluene to n-butanol of 6 : 4.

To the silica sol, 50 g of an n-butanol solution of the polymer-type silane coupling agent was added, then 36.7 g of toluene (manufactured by Kanto Chemical Co., Inc.) was further added, and the mixture was held at 110°C for 24 hours under stirring. Thereafter, 5.5 g of hexamethyldisiloxane (product name: KF-96L, manufactured by Shin-Etsu Chemical Co., Ltd.) as a trimethylsilyl group was added, and the mixture was heated at 60°C for 16 hours. Then, 5.5 g of hexamethyldisiloxane was added again, and the mixture was heated at 60°C for 8 hours.

The silica sol thus obtained was replaced with a toluene solvent by a rotary evaporator to obtain a toluene-dispersed silicone polymer graft silica sol (solid content: 30.5 mass%, butanol: 1.0 mass%, balance: toluene).

### (Reference Example 1) Preparation of silicon dioxide-stannic oxide composite oxide colloidal particles as coating material and production of modified zirconia sol and modified titania sol

In 668.8 g of pure water, 77.2 g of JIS No. 3 sodium silicate (containing 29.8 mass% in terms of SiO₂) was dissolved, and then 20.9 g of sodium stannate NaSnO₃·H₂O (containing 55.1 mass% in terms of SnO₂) was dissolved. The obtained aqueous solution was passed through a column packed with a hydrogen type cation exchange resin (Amberlite (registered trademark) IR-120B). Next, 7.2 g of diisopropylamine was added to the obtained water dispersion sol. The obtained sol was a water dispersion sol of alkaline silicon dioxide-stannic oxide composite oxide colloidal particles (B1), and had a pH of 8.0 and a total metal oxide concentration (SnO₂ and SiO₂) of 1.7 mass%. The primary particle size was 1 to 4 nm as observed with a transmission electron microscope.

A zirconia sol and a titania sol were individually mixed with the water dispersion sol of the silicon dioxide-stannic oxide composite oxide colloidal particles (B1) to produce composite particles in which the surface of the zirconia particles were coated with the silicon dioxide-stannic oxide composite oxide colloidal particles (B1) and composite particles in which the surface of the titania particles were coated with the silicon dioxide-stannic oxide composite oxide colloidal particles (B1). The aqueous medium was replaced with a methanol solvent to produce a methanol-dispersed zirconia sol (SnO₂-SiO₂/ZrO₂ mass ratio = 20 : 100) and a methanol-dispersed titania sol (SnO₂-SiO₂/TiO₂ mass ratio = 30 : 100).

The obtained methanol-dispersed zirconia sol was used in Example 2 described later, and the obtained methanol-dispersed titania sol was used in Example 3 described later.

### [Example 2] Preparation of toluene-dispersed silicone polymer graft zirconia sol

In a 200 ml recovery flask, 26.5 g of methanol and 35.9 g of n-butanol were added to 30 g of the methanol-dispersed zirconia sol (methanol dispersion of zirconia particles having an average primary particle size of 17 nm, coated with SnO₂-SiO₂ composite particles having a primary particle size of 1 to 4 nm) obtained in Reference Example 1. A part of the dispersion medium of the zirconia sol was replaced with a toluene solvent by using a rotary evaporator to obtain 44 g of a zirconia sol (average primary particle size: 17 nm, solid concentration: 20 mass%) dispersed in a solvent having a mixing ratio of toluene to n-butanol of 2 : 8.

To the zirconia sol, 64 g of a solution obtained by mixing 39.3 g of toluene with 24.7 g of a butanol solution of a polymer-type silane coupling agent was added, and the mixture was held at 110°C for 24 hours under stirring. After the above reaction, 3.9 g of hexamethyldisiloxane as a trimethylsilyl group was added, and the mixture was heated at 110°C for 16 hours. Thereafter, 3.9 g of hexamethyldisiloxane was added again, and the mixture was heated at 110°C for 8 hours.

The zirconia sol thus obtained was replaced with a toluene solvent by a rotary evaporator to obtain a toluene-dispersed silicone polymer graft zirconia sol (solid content: 30.5 mass%, butanol: 1.0 mass%, balance: toluene).

### [Example 3] Preparation of toluene-dispersed silicone polymer graft titania sol

In a 200 ml recovery flask, 30 g of the methanol-dispersed titania sol (methanol dispersion of titania particles having an average primary particle size of 17 nm, coated with SnO₂-SiO₂ composite particles having a primary particle size of 1 to 4 nm) obtained in Reference Example 1 was placed, 40.5 g of 2-propanol and 40.5 g of butanol were added, and then 0.9 g of glycolic acid was added. A part of the dispersion medium of the titania sol was replaced with a toluene solvent by using a rotary evaporator to obtain 90 g of a titania sol (average primary particle size: 17 nm, solid concentration: 11.3 mass%) dispersed in a solvent having a mixing ratio of toluene to n-butanol of 2 : 8.

To the titania sol, 54.1 g of a solution obtained by mixing 29.4 g of toluene with 24.7 g of a butanol solution of a polymer-type silane coupling agent was added, and the mixture was held at 110°C for 24 hours under stirring.

After the above reaction, 3.9 g of hexamethyldisilazane (SZ-31, manufactured by Shin-Etsu Chemical Co., Ltd.) as a trimethylsilyl group was added, and the mixture was heated at 60°C for 8 hours.

The titania sol thus obtained was replaced with a toluene solvent by a rotary evaporator to obtain a toluene-dispersed silicone polymer graft titania sol (solid content: 30.5 mass%, butanol: 1.0 mass%, balance: toluene).

### [Example 4] Preparation-2 of toluene-dispersed silicone polymer graft silica sol

In the same manner as in Example 1, 30 g of a silica sol (average primary particle size: 12 nm, silica concentration: 30 mass%) dispersed in a solvent having a mixing ratio of toluene to n-butanol of 6 : 4 was obtained.

To the silica sol, 25 g of an n-butanol solution of the polymer-type silane coupling agent was added, 14.2 g of toluene (manufactured by Kanto Chemical Co., Inc.) was further added, and the mixture was held at 110°C for 24 hours under stirring. Thereafter, 5.5 g of hexamethyldisiloxane (product name: KF-96L, manufactured by Shin-Etsu Chemical Co., Ltd.) as a trimethylsilyl group was added, and the mixture was heated at 60°C for 16 hours. Then, 5.5 g of hexamethyldisiloxane was added again, and the mixture was heated at 60°C for 8 hours.

The silica sol thus obtained was replaced with a toluene solvent by a rotary evaporator to obtain a toluene-dispersed silicone polymer graft silica sol (solid content: 30.5 mass%, butanol: 1.0 mass%, balance: toluene).

### [Example 5] Preparation-3 of toluene-dispersed silicone polymer graft silica sol

In the same manner as in Example 1 except that 30 g of a methanol-dispersed silica sol (product name: MA-ST-M, average primary particle size: 22 nm, silica concentration: 30 mass%, manufactured by Nissan Chemical Corporation) was used, 30 g of a silica sol (average primary particle size: 12 nm, silica concentration: 30 mass%) dispersed in a solvent having a mixing ratio of toluene to n-butanol of 6 : 4 was obtained.

To the silica sol, 28.8 g of an n-butanol solution of the polymer-type silane coupling agent was added, 21.1 g of toluene (manufactured by Kanto Chemical Co., Inc.) was further added, and the mixture was held at 110°C for 24 hours under stirring. Thereafter, 3.2 g of hexamethyldisiloxane (product name: KF-96L, manufactured by Shin-Etsu Chemical Co., Ltd.) as a trimethylsilyl group was added, and the mixture was heated at 60°C for 16 hours. Then, 3.2 g of hexamethyldisiloxane was added again, and the mixture was heated at 60°C for 8 hours.

The silica sol thus obtained was replaced with a toluene solvent by a rotary evaporator to obtain a toluene-dispersed silicone polymer graft silica sol (solid content: 30.5 mass%, butanol: 1.0 mass%, balance: toluene).

### (Reference Example 2) Production of modified tin oxide sol coated with silicon dioxide-stannic oxide composite oxide colloidal particles

In 383 kg of pure water, 37.5 kg of oxalic acid ((COOH)₂·2H₂O) was dissolved, and the solution was placed in a 500 L vessel, heated to 70°C under stirring, and 150 kg of a 35 mass% hydrogen peroxide solution and 75 kg of metallic tin (manufactured by Yamaishi Metal Co., Ltd., trade name: AT-SNNO200N) were added. The addition of the hydrogen peroxide solution and the metallic tin was performed alternately. First, 10 kg of the 35 mass% hydrogen peroxide solution and then 5 kg of the metallic tin were added. This operation was repeated after waiting for the completion of the reaction (5 to 10 minutes during this time). The total amount of the hydrogen peroxide solution and the metallic tin was added, and then 10 kg of the 35 mass% hydrogen peroxide solution was further added. The time required for adding the hydrogen peroxide solution and the metallic tin was 2.5 hours, and after the completion of the addition, the mixture was further heated at 95°C for 1 hour to complete the reaction.

The molar ratio of the hydrogen peroxide solution to the metallic tin was 2.61 as H₂O₂/Sn. The obtained tin oxide aqueous sol had very good transparency. For the tin oxide aqueous sol, the yield was 630 kg, the specific gravity was 1.154, the pH was 1.51, and the concentration of SnO₂ was 14.7 mass%. The obtained sol was observed by a transmission electron microscope and found to be spherical and well dispersed colloidal particles having a primary particle size of 10 to 15 nm. This sol exhibited a slight increase in viscosity when left to stand, but was stable without gelation when left to stand at room temperature for 6 months. To 629 kg of the obtained sol, 231 kg of a 35 mass% hydrogen peroxide solution and 52 kg of pure water were added, and the mixture was adjusted so as to be 10 mass% in terms of SnO₂ and have a H₂O₂/(COOH)₂ molar ratio of 8.0 with respect to oxalic acid at the time of charging, then heated to 95°C, and aged for 5 hours. By this operation, the oxalic acid contained was decomposed into carbon dioxide gas and water by a reaction with hydrogen peroxide. The tin oxide slurry obtained by this operation was cooled to about 40°C, passed through a catalyst tower packed with about 15 L of a platinum-based catalyst (trade name: N-220, manufactured by Sued-Chemie Catalysts Japan, Inc.), and circulated to perform a decomposition treatment of excessive hydrogen peroxide. The liquid flow rate was about 30 L/min., and circulation was performed for 5 hours. Further, the resulting solution was passed through a column packed with an anion exchange resin (Amberlite (registered trademark) IRA-410: manufactured by Organo Corporation) to obtain 1,545 kg of an acidic tin oxide aqueous sol. The obtained acidic tin oxide aqueous sol had a SnO₂ concentration of 11.4 mass%, a pH of 3.97, and a conductivity of 55 µS/cm.

A water dispersion sol of the silicon dioxide-stannic oxide composite oxide colloidal particles (B1) and a tin oxide sol were mixed to produce composite particles in which the surface of tin oxide particles were coated with the silicon dioxide-stannic oxide composite oxide colloidal particles (B1). The aqueous medium was replaced with a methanol solvent to produce a methanol-dispersed tin oxide sol (SnO₂-SiO₂/SnO₂ mass ratio = 15 : 100).

The obtained methanol-dispersed tin sol was used in Example 6 described later.

### [Example 6] Preparation of toluene-dispersed silicone polymer graft tin oxide sol

In a 200 ml recovery flask, 30 g of the methanol-dispersed tin oxide sol (methanol dispersion of tin oxide particles having an average primary particle size of 21 nm, coated with SnO₂-SiO₂ composite particles manufactured by Nissan Chemical Corporation) obtained in Reference Example 2 was placed, and 28.4 g of n-butanol was added. A part of the dispersion medium of the tin sol was replaced with a toluene solvent by using a rotary evaporator to obtain 44 g of a tin oxide sol (average primary particle size: 17 nm, solid concentration: 20 mass%) dispersed in a solvent having a mixing ratio of toluene to n-butanol of 2 : 8.

To the tin oxide sol, 63.7 g of a solution obtained by mixing 39 g of toluene with 24.7 g of a butanol solution of a polymer-type silane coupling agent was added, and the mixture was held at 110°C for 24 hours under stirring. After the above reaction, 2.5 g of hexamethyldisilazane as a trimethylsilyl group was added, and the mixture was heated at 110°C for 16 hours. Thereafter, 2.5 g of hexamethyldisilazane was added again, and the mixture was heated at 110°C for 8 hours.

The tin sol thus obtained was replaced with a toluene solvent by a rotary evaporator to obtain a toluene-dispersed silicone polymer graft tin oxide sol (solid content: 30.5 mass%, butanol: 1.0 mass%, balance: toluene).

### [Comparative Example 1] Preparation of toluene-dispersed phenyltrimethoxysilane-coated silica sol

A toluene-dispersed phenyltrimethoxysilane-coated silica sol (solid content: 30.5 mass%, butanol: 1.0 mass%, balance: toluene) was obtained in the same manner as in Example 1 except that 1.5 g of phenyltrimethoxysilane was used instead of 50 g of the n-butanol solution of the polymer-type silane coupling agent in Example 1.

### [Comparative Example 2] Preparation of methyl ethyl ketone-dispersed phenyltrimethoxysilane-coated zirconia sol

A methyl ethyl ketone-dispersed phenyltrimethoxysilane-coated zirconia sol (solid content: 30.5 mass%, butanol: 1.0 mass%, balance: methyl ethyl ketone) was obtained in the same manner as in Example 2 except that 1.0 g of phenyltrimethoxysilane was used instead of 50 g of the n-butanol solution of the polymer-type silane coupling agent and methyl ethyl ketone was used instead of toluene in Example 2.

### [Comparative Example 3] Preparation of toluene-dispersed one-terminal epoxy-modified silicone-coated silica sol

A toluene-dispersed one-terminal epoxy-modified silicone-coated silica sol (solid content: 30.5 mass%, butanol: 1.0 mass%, balance: toluene) was obtained in the same manner as in Example 1 except that in the synthesis of the polymer-type silane coupling agent, the one-terminal epoxy-modified silicone (functional group equivalent: 4,700 g/mol, viscosity: 60 mm²/s, product name: X-22-173DX, manufactured by Shin-Etsu Chemical Co., Ltd.) was not reacted with 3-aminopropyltrimethoxysilane, and only 12.8 g of the one-terminal epoxy-modified silicone (functional group equivalent: 4,700 g/mol, viscosity: 60 mm²/s, product name: X-22-173DX, manufactured by Shin-Etsu Chemical Co., Ltd.) was used as the surface modifier.

### (Dispersion of above sol in silicone oil)

In a 20 ml glass sample bottle, 2 g each of a dimethyl silicone oil (trade name: KF-96: viscosity: 100 centistokes, average molecular weight: 5,500, KF-96: viscosity: 300 centistokes, average molecular weight: 10,000, KF-96: viscosity: 500 centistokes, average molecular weight: 18,000, and KF-96: viscosity: 1,000 centistokes, average molecular weight: 25,000, all manufactured by Shin-Etsu Chemical Co., Ltd.) was taken, and 2 g each of toluene was added to prepare a silicone solution.

Thereafter, 2 g of the toluene-dispersed silicone graft silica sol obtained in Example 1 was added to each of the silicone solutions, and the mixture was heated and stirred on a hot plate at 220°C for 1 hour to volatilize and remove toluene. The appearance of the dispersion after removal of the toluene solvent was evaluated.

Similarly, the toluene-dispersed silicone graft zirconia sol obtained in Example 2, the toluene-dispersed silicone polymer graft titania sol obtained in Example 3, the toluene-dispersed phenyltrimethoxysilane-coated silica sol obtained in Comparative Example 1, the methyl ethyl ketone-dispersed phenyltrimethoxysilane-coated zirconia sol obtained in Comparative Example 2, and the toluene-dispersed one-terminal epoxy-modified silicone-coated silica sol obtained in Comparative Example 3 were also evaluated in the same manner.

**[Table 1]**

| | | Table 1 | | |
|---|---|---|---|---|
| Silicone oil | KF-96 100 CS | KF-96 300CS | KF-96 500CS | KF-96 1000CS |
| Example 1 | Colorless and transparent | Colorless and transparent | Colorless and transparent | Colorless and transparent |
| Example 2 | Transparent colloidal color | Transparent colloidal color | Transparent colloidal color | - |
| Example 3 | Transparent colloidal color | Transparent colloidal color | - | - |
| Example 4 | Colorless and transparent | Colorless and transparent | Colorless and transparent | Colorless and transparent |
| Example 5 | Colorless and transparent | Transparent colloidal color | - | - |
| Example 6 | Transparent colloidal color | - | - | - |
| Comparative Example 1 | Cloudiness | Cloudiness | Cloudiness | Cloudiness |
| Comparative Example 2 | Cloudiness | Cloudiness | Cloudiness | Cloudiness |
| Comparative Example 3 | Cloudiness | Cloudiness | Cloudiness | Cloudiness |

In Table 1, (---) indicates that no measurement was performed.

In Table 1, colorless and transparent indicates a range of 95% in terms of transmittance, transparent colloidal color indicates a range of 94 to 70% in terms of transmittance, and cloudiness indicates a range of 1% or less in terms of transmittance.

The transmittance measurement was performed using a quartz cell having an optical path length of 2 mm, and the irradiation light was light of 650 nm in Examples 1 to 3 and Comparative Examples 1 to 3, and light of 520 nm in Examples 4 to 6.

### INDUSTRIAL APPLICABILITY

A dispersion in which a dispersoid containing surface-modified colloidal inorganic oxide particles of the present invention is dispersed in a silicone oil can be applied as a silicone oil having improved refractive index and mechanical properties for applications in which conventional silicone oils are used. In addition, since the dispersion has high transparency, the inorganic oxide particles, the surface modifier, and the dispersion can be used for various applications, for example, a compounding agent for a silicone resin, a sealant for an LED, and the like.

## Claims

1. Inorganic oxide particles surface-modified with a surface modifier represented by following general formula (a):
[Chemical Formula 1]
**S-K** Formula (a)
wherein S represents a hydrolyzable silane, and K represents silicone.

2. Inorganic oxide particles surface-modified with a surface modifier represented by following general formula (1): 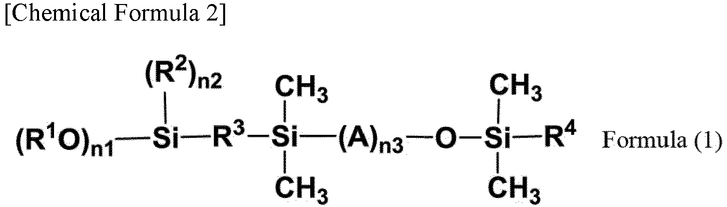 wherein
R¹ represents a methyl group or an ethyl group,
R² represents an alkyl group having 1 to 10 carbon atoms, an aryl group having 6 to 40 carbon atoms, or a combination thereof,
R³ is a linking group comprising a chemical group produced by a reaction between a B group and a C group,
the B group is an epoxy group, a vinyl group, a hydroxyl group, or an isocyanate group,
the C group is a carboxyl group, an acid anhydride group, an amino group, a thiol group, a hydroxyl group, or an isocyanate group,
R⁴ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, or an OH group, and modifies a silanol group on a surface of silica particles with an OH group obtained by hydrolysis of an OR¹ group,
a unit structure A includes a unit structure of following general formula (1-1) and a unit structure of following general formula (1-2), and the number of unit structures of the general formula (1-1) and the number of unit structures of the general formula (1-2) included in the unit structure A are n4 and n5, respectively: 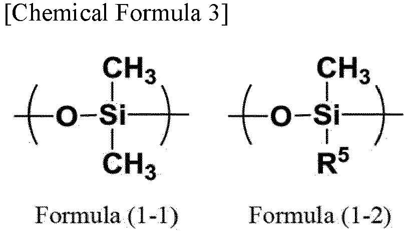 wherein R⁵ represents an alkyl group having 1 to 10 carbon atoms and optionally comprising an epoxy group, a vinyl group, a hydroxyl group, an isocyanate group, a carboxyl group, an acid anhydride group, an amino group, or a thiol group, an aryl group having 6 to 40 carbon atoms, an OH group, or a hydrogen atom, and
n1 is an integer of 1 to 3, n2 is an integer of 0 to 1, n1 + n2 = 3, n3 = n4 + n5, n3 is an integer of 1 to 100, 0 ≤ n4 ≤ 100, and 1 ≤ n5 ≤ 100.

3. The inorganic oxide particles according to claim 1 or 2, wherein the inorganic oxide particles have an average primary particle size of 5 to 100 nm.

4. The inorganic oxide particles according to any one of claims 1 to 3, wherein the inorganic oxide particles are selected from the group consisting of silica particles, zirconia particles, titania particles, and tin oxide particles.

5. The inorganic oxide particles according to any one of claims 2 to 4, wherein the B group is an epoxy group, and the C group is an amino group.

6. The inorganic oxide particles according to any one of claims 2 to 5, wherein R⁴ and/or R⁵ is selected from the group consisting of an alkyl group having 1 to 10 carbon atoms, an aryl group having 6 to 40 carbon atoms, and an OH group.

7. The inorganic oxide particles according to any one of claims 2 to 6, wherein the inorganic oxide particles are silica particles surface-modified with a surface modifier represented by a general formula (a) or the general formula (1) at 0.1 to 10 groups/nm².

8. The inorganic oxide particles according to any one of claims 1 to 7, wherein the inorganic oxide particles further have a trimethylsilyl group at 0.3 to 20 groups/nm² on a surface thereof.

9. A dispersion comprising the inorganic oxide particles according to any one of claims 1 to 8 dispersed in a silicone oil.

10. The dispersion according to claim 9, wherein the silicone oil is a dimethyl silicone oil, a methyl phenyl silicone oil, or a methyl hydrogen silicone oil having a viscosity of 100 centistokes to 5,000 centistokes.

11. A method for producing the surface modifier according to any one of claims 1 to 8, the method comprising a step of:
reacting a silicone oil comprising a functional group (b) at a site consisting of a side chain, one terminal, both terminals, or a combination thereof with a silane coupling agent comprising a functional group (c) in an alcohol solvent at a molar ratio of the functional group (b) : the functional group (c) of 1 : 1 to 1 : 0.8,
the functional group (b) being selected from the group consisting of an epoxy group, a vinyl group, a hydroxyl group, and an isocyanate group,
the functional group (c) being selected from the group consisting of a carboxyl group, an acid anhydride group, an amino group, a thiol group, a hydroxyl group, and an isocyanate group.

12. A method for producing the dispersion according to claim 9 or 10, the method comprising:
a step (i): mixing an inorganic oxide sol dispersed in a mixed solvent of a hydrocarbon and an alcohol with an alcohol solution of a surface modifier represented by a general formula (1) in a hydrocarbon solvent at a weight ratio of inorganic oxide : surface modifier represented by the general formula (1) of 1 : 0.1 to 10;
a step (ii): performing a reaction at 60°C to 150°C for 0.1 to 60 hours;
a step (iii): removing an alcohol solvent to obtain a surface-modified inorganic oxide sol dispersed in the hydrocarbon solvent; and
a step (iv): mixing the surface-modified inorganic oxide sol dispersed in the hydrocarbon solvent with a silicone oil to remove a hydrocarbon.
